# EUROPEAN PATENT APPLICATION

(11) **EP 4 793 979 A1**
(43) Date of publication of application: **19.08.2026**
(21) Application number: 25880929.2
(22) Date of filing: 17.11.2025
(51) Int. Cl.: H01G 5/013, H01G 13/00, H01B 3/30

(54) **DIELECTRIC ELASTOMER, METHOD FOR PREPARING SAME, STRETCHABLE CAPACITOR, AND METHOD FOR PREPARING SAME**

(30) Priority: 27.12.2024 KR 20240199217
(71) Applicant: IUCF-HYU (INDUSTRY-UNIVERSITY COOPERATION FOUNDATION HANYANG UNIVERSITY), Seoul 04763 (KR)
(72) Inventor: JUNG, Yei Hwan, Seoul 04426 (KR); CHOE, Geon Oh, Gimpo-si, Gyeonggi-do 10131 (KR)
(74) Representative: Dr. Gassner & Partner mbB
(86) International application number: PCT/KR2025/018940
(87) International publication number: WO 2026/141972

(57) **Abstract**

Provided is a method for manufacturing a dielectric elastomer, the method including: preparing a co-solvent; preparing a base source by mixing the co-solvent with a polymer precursor; preparing a dielectric elastomer source by mixing the base source with nanoparticles; and preparing a dielectric elastomer in which a polymer formed from the polymer precursor surrounds the nanoparticles by coating and curing the dielectric elastomer source on a support, wherein adjacent nanoparticles form a cluster.

## Description

### [Technical Field]

The present disclosure relates to a dielectric elastomer and a manufacturing method thereof, and a stretchable capacitor and a manufacturing method thereof, and more particularly, to a dielectric elastomer and a manufacturing method thereof, and a stretchable capacitor and a manufacturing method thereof, in which stretching and pressure are distinguished, a capacitance is maintained upon stretching, and the capacitance is increased upon pressurization.

### [Background Art]

As the demand for technologies such as wearable devices, body-attachable sensors, and/or soft robots is increased, stretchable capacitors are also being developed actively.

For example, Korean Unexamined Patent Publication No. 10-2023-0126009 discloses a variable capacitor including: a dielectric body having a tube shape and formed therein with a through-hole in a length direction; a first coating layer that is electrically conductive and formed by bonding a liquid electrically conductive coating agent to an outer surface of the dielectric body through curing; and a second coating layer that is electrically conductive and formed by bonding a liquid electrically conductive coating agent to a side surface of the through-hole of the dielectric body through curing, wherein the first coating layer is one electrode, the second coating layer is an opposite electrode, the first coating layer, the second coating layer, and the dielectric body constitute one capacitor, and the dielectric body, the first coating layer, and the second coating layer include silicone rubber having elasticity and stretchability, so that a capacitance of the capacitor may be varied by an external force applied to the dielectric body in the length direction or a thickness direction.

For another example, Korean Patent Registration Publication No. 10-1932816 discloses a method for manufacturing a stretchable capacitor, the method including: forming a dielectric layer on a surface of a conductor fiber; forming a conductor layer on a surface of a conductor/dielectric fiber; forming a coil shape by winding a conductor/dielectric/conductor fiber around a core rod; forming a stretchable polymer part surrounding a conductor/dielectric/conductor coil wound around the core rod; and removing the core rod from the conductor/dielectric/conductor coil embedded in the stretchable polymer part.

However, according to conventional stretchable capacitors, stretching and pressure may not be substantially distinguished. When a stretchable capacitor is worn on a body, stretching and/or pressure may occur in the stretchable capacitor according to a movement of the body. However, the stretchable capacitors developed up to now may not substantially distinguish between the stretching and the pressure occurring according to the movement of the body
Accordingly, since the conventional stretchable capacitors may not substantially distinguish between signals according to the stretching and the pressure occurring from the body, the conventional stretchable capacitors have limitations that signal interpretation capabilities and/or data reliability are reduced. In addition, since the conventional stretchable capacitors may not substantially distinguish between the stretching and the pressure, the conventional stretchable capacitors have limitations that performance of a circuit is reduced due to undesirable variations in performance of the capacitor when subjected to tension.

### [Disclosure]

### [Technical Problem]

A technical object of the present disclosure is to provide a dielectric elastomer and a manufacturing method thereof, and a stretchable capacitor and a manufacturing method thereof, capable of distinguishing between stretching and pressure.

Another technical object of the present disclosure is to provide a dielectric elastomer and a manufacturing method thereof, and a stretchable capacitor and a manufacturing method thereof, capable of maintaining a capacitance upon stretching.

Still another technical object of the present disclosure is to provide a dielectric elastomer and a manufacturing method thereof, and a stretchable capacitor and a manufacturing method thereof, capable of increasing a capacitance upon pressurization.

Technical objects of the present disclosure are not limited to the technical objects described above.

### [Technical Solution]

To achieve the technical objects described above, the present disclosure provides a method for manufacturing a dielectric elastomer.

According to one embodiment, the method for manufacturing the dielectric elastomer includes: preparing a co-solvent; preparing a base source by mixing the co-solvent with a polymer precursor; preparing a dielectric elastomer source by mixing the base source with nanoparticles; and preparing a dielectric elastomer in which a polymer formed from the polymer precursor surrounds the nanoparticles by coating and curing the dielectric elastomer source on a support, wherein adjacent nanoparticles form a cluster.

According to one embodiment, the co-solvent may include a dispersion solution and a non-dispersion solution, and the co-solvent may form the nanoparticles into the cluster.

According to one embodiment, the co-solvent may include ethyl alcohol (EtOH), dichloromethane (DCM), or hexane (HX), the nanoparticle may include at least one selected from the group of inorganic nanoparticles consisting of barium titanate (BaTiO₃), aluminum oxide (Al₂O₃), and silicon dioxide (SiO₂), and the polymer precursor may include an Ecoflex precursor.

According to one embodiment, when the co-solvent includes the ethyl alcohol (EtOH) and the dichloromethane (DCM), greater than 18 wt% and less than 25 wt% of barium titanate (BaTiO₃) may be provided, and when the co-solvent includes the ethyl alcohol (EtOH) and the hexane (HX), greater than 18 wt% and less than 22 wt% of barium titanate (BaTiO₃) may be provided.

According to one embodiment, before the coating, the method may further include washing the support, and the washing may include: boiling the support in a solution; and performing ultrasonication on the boiled support.

According to one embodiment, before the coating, the method may further include performing surface treatment on the support, and in the performing of the surface treatment, the surface treatment may be performed on the washed support with a release agent.

According to one embodiment, the coating may be performed in a rotation atmosphere of greater than 250 rpm and less than 1000 rpm for greater than 20 seconds and less than 1 minute, and the curing may be performed at greater than 50 °C and less than 100 °C for greater than 30 minutes and less than 2 hours.

According to one embodiment, the coating and the curing may be set as one cycle, and the cycle may be repeatedly performed a plurality of times.

According to one embodiment, in the preparing of the dielectric elastomer source, a surfactant may be further mixed.

To achieve the technical objects described above, the present disclosure provides a dielectric elastomer.

According to one embodiment, the dielectric elastomer includes: nanoparticles; and a polymer surrounding the nanoparticles, wherein adjacent nanoparticles form a cluster.

According to one embodiment, in the dielectric elastomer, upon the stretching, the capacitance may be maintained as the cluster is deformed into an ellipsoidal shape, and upon the pressurization, the capacitance may be increased as a thickness of the dielectric elastomer is decreased.

To achieve the technical objects described above, the present disclosure provides a method for manufacturing a stretchable capacitor.

According to one embodiment, the method for manufacturing the stretchable capacitor includes: preparing a co-solvent; preparing a base source by mixing the co-solvent with a polymer precursor; preparing a dielectric elastomer source by mixing the base source with nanoparticles; preparing a dielectric elastomer including a cluster formed from adjacent nanoparticles by coating and curing the dielectric elastomer source on a support; detaching the dielectric elastomer from the support; and preparing a stretchable capacitor by arranging substrates on both sides of the dielectric elastomer.

According to one embodiment, the substrate may include silver flakes or a copper pattern (patterned copper).

To achieve the technical objects described above, the present disclosure provides a stretchable capacitor.

According to one embodiment, the stretchable capacitor includes: a dielectric elastomer including nanoparticles and a polymer surrounding the nanoparticles; and substrates arranged on both sides of the dielectric elastomer, wherein adjacent nanoparticles form a cluster in the dielectric elastomer, a capacitance is maintained upon stretching, the capacitance is increased upon pressurization, and a gauge factor (GF) is 0.

### [Advantageous Effects]

According to an embodiment of the present disclosure, there may be provided a method for manufacturing a dielectric elastomer, the method including: preparing a co-solvent; preparing a base source by mixing the co-solvent with a polymer precursor; preparing a dielectric elastomer source by mixing the base source with nanoparticles; and preparing a dielectric elastomer in which a polymer formed from the polymer precursor surrounds the nanoparticles by coating and curing the dielectric elastomer source on a support.

Accordingly, there may be provided a dielectric elastomer including the nanoparticles and a polymer surrounding the nanoparticles, wherein adjacent nanoparticles form a cluster.

Furthermore, according to an embodiment of the present disclosure, there may be provided a stretchable capacitor including substrates arranged on both sides of the dielectric elastomer.

According to one embodiment, the cluster can be deformed from a spherical shape into an ellipsoidal shape when the dielectric elastomer is stretched.

Accordingly, a capacitance of the stretchable capacitor can be maintained.

According to one embodiment, a thickness of the dielectric elastomer can be decreased when the dielectric elastomer is pressurized.

Accordingly, the capacitance of the stretchable capacitor can be increased.

In other words, the stretchable capacitor according to the embodiment of the present disclosure can distinguish between stretching and pressure.

### [Description of Drawings]

FIG. 1 is a view for describing a method for manufacturing a dielectric elastomer according to an embodiment of the present disclosure.
FIG. 2 is a view for describing a method for preparing a co-solvent and a base source according to the embodiment of the present disclosure.
FIG. 3 is a view for describing a method for preparing a dielectric elastomer source according to the embodiment of the present disclosure.
FIG. 4 is a view for describing coating of the dielectric elastomer source according to the embodiment of the present disclosure.
FIG. 5 is a view for describing a dielectric elastomer according to an embodiment of the present disclosure.
FIG. 6 is a view for describing stretching of the dielectric elastomer according to the embodiment of the present disclosure.
FIG. 7 is a view for describing a method for manufacturing a stretchable capacitor according to an embodiment of the present disclosure.
FIG. 8 is a view for describing a stretchable capacitor according to an embodiment of the present disclosure.
FIG. 9 is a view for describing stretching and pressurization of the stretchable capacitor according to the embodiment of the present disclosure.
FIG. 10 shows photographs of a dielectric elastomer manufactured according to an experimental example of the present disclosure before and after stretching.
FIG. 11 shows graphs obtained by measuring a cluster size of dielectric elastomers according to Experimental Example 1-1 and Experimental Example 1-2 of the present disclosure.
FIG. 12 shows photographs of a cluster of the dielectric elastomer according to Experimental Example 1-1 of the present disclosure before and after stretching.
FIG. 13 shows photographs of a cluster of the dielectric elastomer according to Experimental Example 1-2 of the present disclosure before and after stretching.
FIG. 14 is a graph obtained by measuring stress-strain of dielectric elastomers according to Experimental Example 2-1 to Experimental Example 2-7 of the present disclosure.
FIG. 15 is a graph obtained by measuring stress-strain of dielectric elastomers according to Experimental Example 3-1 to Experimental Example 3-7 of the present disclosure.
FIG. 16 is a graph obtained by measuring a capacitance variation of stretchable capacitors according to Experimental Example 2-1 to Experimental Example 2-7 of the present disclosure.
FIG. 17 is a graph obtained by measuring a capacitance variation of stretchable capacitors according to Experimental Example 3-1 to Experimental Example 3-7 of the present disclosure.
FIG. 18 is a graph obtained by measuring a capacitance variation of the stretchable capacitors according to Experimental Example 2-4 to Experimental Example 2-6 of the present disclosure.
FIG. 19 is a graph obtained by measuring a capacitance variation of the stretchable capacitors according to Experimental Example 3-4 to Experimental Example 3-6 of the present disclosure.
FIG. 20 is a graph obtained by measuring a gauge factor (GF) of the stretchable capacitors according to Experimental Example 2-1 to Experimental Example 2-7 of the present disclosure.
FIG. 21 is a graph obtained by measuring a gauge factor (GF) of the stretchable capacitors according to Experimental Example 3-1 to Experimental Example 3-7 of the present disclosure.
FIG. 22 is a graph obtained by summarizing the gauge factor (GF) of the stretchable capacitors according to Experimental Example 2-1 to Experimental Example 2-7 and Experimental Example 3-1 to Experimental Example 3-7 of the present disclosure.
FIG. 23 is a graph obtained by measuring a resistance variation of the stretchable capacitors according to Experimental Example 2-4 to Experimental Example 2-6 and Experimental Example 3-4 to Experimental Example 3-6 of the present disclosure.
FIG. 24 is a graph obtained by measuring a capacitance variation of the stretchable capacitors according to Experimental Example 2-4 to Experimental Example 2-6 and Experimental Example 3-4 to Experimental Example 3-6 of the present disclosure.
FIG. 25 is a graph obtained by measuring a gauge factor (GF) of the stretchable capacitors according to Experimental Example 2-4 to Experimental Example 2-6 and Experimental Example 3-4 to Experimental Example 3-6 of the present disclosure.
FIG. 26 is a graph obtained by measuring a capacitance variation of the stretchable capacitor according to Experimental Example 3-5 of the present disclosure over 100 cycles.
FIG. 27 is a graph obtained by measuring a capacitance variation according to a movement of a body when the stretchable capacitor according to Experimental Example 3-5 of the present disclosure is worn on a knee of the body.
FIG. 28 is a graph obtained by measuring a capacitance variation according to a movement of a body when the stretchable capacitor according to Experimental Example 3-5 of the present disclosure is worn on an arm of the body.
FIG. 29 shows graphs obtained by measuring signals when the stretchable capacitor according to Experimental Example 3-5 of the present disclosure and a conventional capacitor are applied to a differentiator.
FIG. 30 shows graphs obtained by measuring signals when the stretchable capacitor according to Experimental Example 3-5 of the present disclosure and the conventional capacitor are applied to an integrator.
FIG. 31 shows graphs obtained by measuring signals when the stretchable capacitor according to Experimental Example 3-5 of the present disclosure and the conventional capacitor are applied to a resistor-capacitor circuit (RC circuit).

### [Mode for Invention]

Hereinafter, exemplary embodiments of the present disclosure will be described in detail with reference to the accompanying drawings. However, the technical idea of the present disclosure is not limited to the embodiments described herein, but may be embodied in different forms. The embodiments introduced herein are provided to sufficiently deliver the idea of the present disclosure to those skilled in the art so that the disclosed contents may become thorough and complete.

When it is mentioned in the present disclosure that one element is on another element, it means that one element may be directly formed on another element, or a third element may be interposed between one element and another element. Further, in the drawings, thicknesses of shapes and regions are exaggerated for effective description of the technical contents.

In addition, although the terms such as first, second, and third have been used to describe various elements in various embodiments of the present disclosure, the elements are not limited by the terms. The terms are used only to distinguish one element from another element. Therefore, an element mentioned as a first element According to one embodiment may be mentioned as a second element in another embodiment. The embodiments described and illustrated herein include their complementary embodiments, respectively. Further, the term "and/or" used in the present disclosure is used to include at least one of the elements enumerated before and after the term.

As used herein, an expression in a singular form includes a meaning of a plural form unless the context clearly indicates otherwise. Further, the terms such as "including" and "having" are intended to designate the presence of features, numbers, steps, elements, or combinations thereof described herein, and shall not be construed to preclude any possibility of the presence or addition of one or more other features, numbers, steps, elements, or combinations thereof. In addition, the term "connection" used herein is used to include both indirect and direct connections of a plurality of elements.

In addition, as used herein, the term "cluster" has a meaning including a group formed by adjacent nanoparticles.

In addition, the term such as "... unit", "...er (or)", or "module" described herein refers to a unit for processing at least one function or operation, which may be implemented through hardware, software, or a combination of hardware and software.

Further, in the following description of the present disclosure, detailed descriptions of known functions or configurations incorporated herein will be omitted when they may make the gist of the present disclosure unnecessarily unclear.

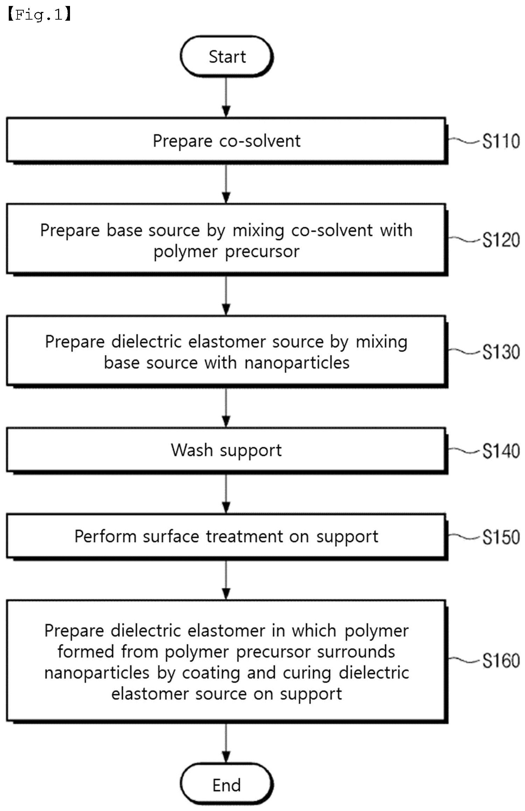

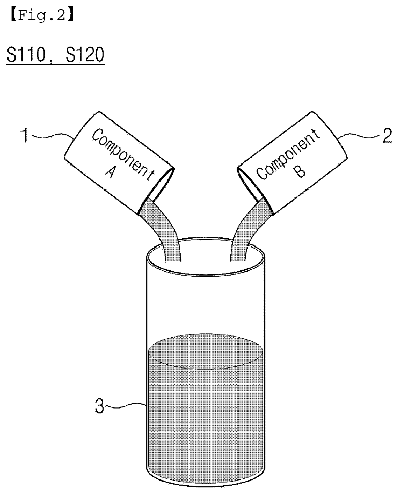

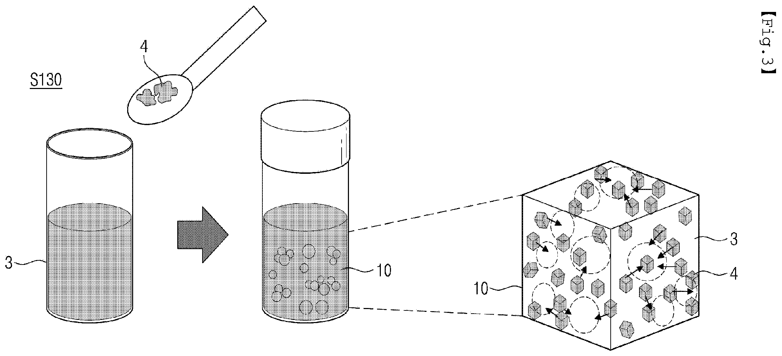

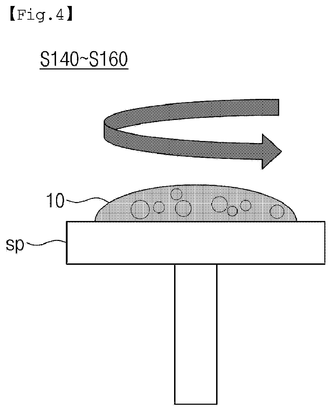

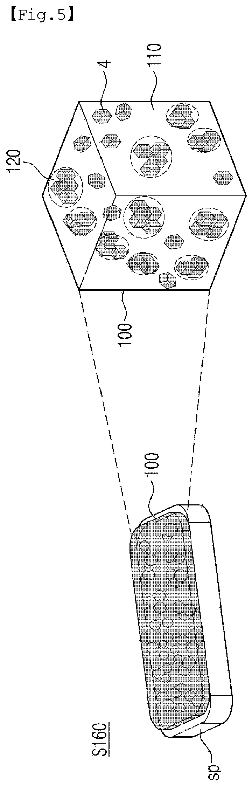

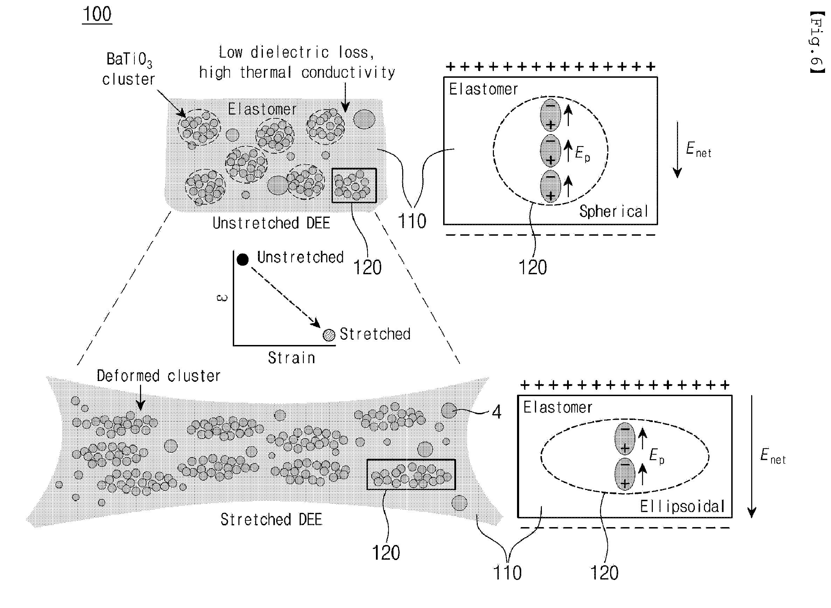

FIG. 1 is a view for describing a method for manufacturing a dielectric elastomer according to an embodiment of the present disclosure, FIG. 2 is a view for describing a method for preparing a co-solvent and a base source according to the embodiment of the present disclosure, FIG. 3 is a view for describing a method for preparing a dielectric elastomer source according to the embodiment of the present disclosure, FIG. 4 is a view for describing coating of the dielectric elastomer source according to the embodiment of the present disclosure, FIG. 5 is a view for describing a dielectric elastomer according to an embodiment of the present disclosure, and FIG. 6 is a view for describing stretching of the dielectric elastomer according to the embodiment of the present disclosure.

Referring to FIGS. 1 and 2, a co-solvent 1 may be prepared (S110).

According to one embodiment, the co-solvent 1 may include a dispersion solution and a non-dispersion solution. In other words, the co-solvent 1 may be a mixed solvent of the dispersion solution and the non-dispersion solution.

Accordingly, nanoparticles 4 (see FIG. 5) that will be described below may be formed into a cluster 120.

The dispersion solution may be, for example, ethyl alcohol (EtOH), and the non-dispersion solution may be, for example, dichloromethane (DCM) or hexane (HX). However, embodiments are not limited thereto.

In more detail, for example, the co-solvent 1 may be at least one selected from solvents having various polarities as shown in Table 1 below. However, the embodiments are not limited thereto.

**[Table 1]**

| Solvent | Polarity index (P') |
|---|---|
| Hexane (HX) | 0.1 |
| Cyclohexane | 0.1 |
| Toluene | 2.4 |
| Dichloromethane (DCM) | 3.1 |
| Isopropanol | 3.9 |
| Tetrahydrofuran | 4 |
| Ethanol (EtOH) | 4.3 |
| Ethyl acetate | 4.4 |
| Acetone | 5.1 |
| Methanol | 5.1 |
| Acetonitrile | 5.8 |
| Water | 10.2 |

According to one embodiment, as a difference in polarity indexes between the solvents included in the co-solvent 1 becomes greater, a size of the formed cluster 120 may gradually become larger. In more detail, for example, in Table 1, when the co-solvent 1 includes ethyl alcohol (EtOH) and dichloromethane (DCM), the difference in polarity indexes may be 1.2, and when the co-solvent 1 includes ethyl alcohol (EtOH) and hexane (HX), the difference in polarity indexes may be 4.2.

Accordingly, when the co-solvent 1 includes the ethyl alcohol (EtOH) and the hexane (HX), which have a greater difference in polarity indexes, the size of the formed cluster 120 may be larger.

Continuously referring to FIGS. 1 and 2, a base source 3 may be prepared by mixing the co-solvent 1 with a polymer precursor 2 (S120).

According to one embodiment, the polymer precursor 2 may be formed of a polymer 110 (see FIG. 5) that will be described below so as to surround the nanoparticles 4. The polymer precursor 2 may be, for example, a silicon-based polymer precursor or an organic-based polymer precursor. In more detail, for example, the polymer precursor 2 may be an Ecoflex precursor. However, the embodiments are not limited thereto.

Continuously referring to FIGS. 1 and 3, a dielectric elastomer source 10 may be prepared by mixing the base source 3 with the nanoparticles 4 (S130). The nanoparticles 4 may be, for example, at least one selected from the group of inorganic nanoparticles consisting of barium titanate (BaTiO₃), aluminum oxide (Al₂O₃), and silicon dioxide (SiO₂). In more detail, for example, when the co-solvent 1 includes the ethyl alcohol (EtOH) and the dichloromethane (DCM), greater than 18 wt% and less than 25 wt% of the barium titanate (BaTiO₃) may be mixed as the nanoparticles 4. In more detail, for example, when the co-solvent 1 includes the ethyl alcohol (EtOH) and the dichloromethane (DCM), 20 wt% or 22 wt% of the barium titanate (BaTiO₃) may be mixed as the nanoparticles 4.

Accordingly, a dielectric elastomer 100 (see FIG. 5) manufactured thereby may include a cluster 120 having a small size.

Accordingly, the manufactured dielectric elastomer 100 may have excellent flexibility and stretchability.

Furthermore, similar to the example described above, when the co-solvent 1 includes the ethyl alcohol (EtOH) and the dichloromethane (DCM), and 20 wt% or 22 wt% of the barium titanate (BaTiO₃) is mixed as the nanoparticles 4, a stretchable capacitor 1000 manufactured thereby may have a gauge factor (GF) of 0.

According to one embodiment, the gauge factor (GF) may be expressed by the formula below, and may be an important parameter indicating sensitivity to mechanical deformation in a capacitor, for example, a strain gauge, a strain-sensitive capacitor, or the like. $GF = ΔC / {C}_{0} ε$

In this case, C₀ may represent an initial capacitance before deformation, ε may represent a strain, and △C may represent a varied capacitance after deformation. For example, when a capacitor has a gauge factor (GF) of greater than 1, the capacitor may be highly sensitive to deformation so that even small deformation may result in a large capacitance variation. For another example, when a capacitor has a gauge factor (GF) of 1, a capacitance of the capacitor may be varied in direct proportion to deformation. For another example, when a capacitor has a gauge factor (GF) of less than 1, the capacitor may be less sensitive to deformation so as to exhibit a less variation. For another example, when a capacitor has a gauge factor (GF) of 0, the capacitance of the capacitor may be decreased upon deformation, and the decrease in capacitance may be observed, for example, in a special-purpose sensor.

In other words, when a capacitor has a high gauge factor (GF), the capacitor may have high sensitivity to deformation detection so as to enable precise measurement. However, due to high deformation sensitivity, the capacitor may have a high probability of malfunctioning in an unstable environment, for example, an environment in which a temperature, pressure, or the like is unstable. Conversely, when a capacitor has a low gauge factor (GF), the capacitor may have low insensitivity to deformation so as to maintain an accurate and stable signal.

In particular, when a capacitor has a gauge factor (GF) of 0, the capacitor may distinguish between stretching and pressure.

In other words, when the capacitor has the gauge factor (GF) of 0, a capacitance may be maintained upon stretching, and the capacitance may be increased upon pressurization. According to an embodiment of the present disclosure, when the co-solvent 1 includes the ethyl alcohol (EtOH) and the dichloromethane (DCM), and 20 wt% or 22 wt% of the barium titanate (BaTiO₃) is mixed as the nanoparticles 4, the manufactured stretchable capacitor 1000 may have a gauge factor (GF) of 0, so that the stretchable capacitor 1000 may distinguish between stretching and pressure.

In other words, since the stretchable capacitor 1000 has a gauge factor (GF) of 0, a capacitance may be maintained upon stretching, and the capacitance may be increased upon pressurization.

For another example, when the co-solvent 1 includes the ethyl alcohol (EtOH) and the hexane (HX), greater than 18 wt% and less than 22 wt% of the barium titanate (BaTiO₃) may be mixed as the nanoparticles 4. In more detail, for example, when the co-solvent 1 includes the ethyl alcohol (EtOH) and the hexane (HX), 20 wt% of the barium titanate (BaTiO₃) may be mixed as the nanoparticles 4.

Accordingly, the manufactured dielectric elastomer 100 may include a cluster having a large size. In addition, the manufactured dielectric elastomer 100 may have a high cluster density.

Accordingly, the manufactured dielectric elastomer 100 may have excellent stability and stretchability. In more detail, the manufactured dielectric elastomer 100 may have excellent frequency resonance stability and long-term cycle stability.

Furthermore, when the co-solvent 1 includes the ethyl alcohol (EtOH) and the hexane (HX), and 22 wt% of the barium titanate (BaTiO₃) is mixed as the nanoparticles 4, the manufactured stretchable capacitor 1000 may have a gauge factor (GF) of 0.

Accordingly, the manufactured stretchable capacitor 1000 may distinguish between stretching and pressure.

In other words, since the stretchable capacitor 1000 has a gauge factor (GF) of 0, a capacitance may be maintained upon stretching, and the capacitance may be increased upon pressurization.

According to one embodiment, in the preparation of the dielectric elastomer source, a surfactant, for example, an amphoteric surfactant, a nonionic surfactant, a cationic surfactant, or an anionic surfactant may be further mixed.

Accordingly, according to the prepared dielectric elastomer source 10, dispersion degrees of the polymer precursor 2 and the nanoparticles 4 may be adjusted.

Accordingly, according to the manufactured dielectric elastomer 100 (see FIG. 5), the cluster 120 may be easily formed, and the capacitance of the stretchable capacitor 1000 including the dielectric elastomer 100 may be stably maintained.

Continuously referring to FIGS. 1 and 4, a support sp may be washed (S140). The support sp may be, for example, a glass substrate or an oxide substrate, for example, a silica (SiO₂) substrate, but is not limited thereto. Any support that enables coating and curing of the provided dielectric elastomer source 10 may be used without being limited.

According to one embodiment, the support sp may be washed through boiling. In more detail, for example, the support sp may be washed through boiling in an acetone solution.

According to one embodiment, ultrasonication may be performed on the boiled support sp. In more detail, for example, the ultrasonication may be sequentially performed on the boiled support sp by using water, acetone, and isopropyl alcohol in an order of water, acetone, and isopropyl alcohol.

Accordingly, a foreign substance may be minimized on a surface of the support sp, and the dielectric elastomer source 10 may be uniformly coated on the support sp.

Continuously referring to FIGS. 1 and 4, surface treatment may be performed on the support sp (S150).

According to one embodiment, the surface treatment may be performed on the washed support sp with a release agent. In more detail, for example, the surface treatment may be performed on the washed support sp with Ease Release 200 (ER-200).

Accordingly, when the dielectric elastomer 100 is prepared by coating and curing the dielectric elastomer source 10 on the support sp, the dielectric elastomer 100 may be easily detached from the support sp.

Continuously referring to FIGS. 1, 4, and 5, a dielectric elastomer 100 in which a polymer 110 formed from the polymer precursor 2 surrounds the nanoparticles 4 may be prepared by coating and curing the dielectric elastomer source 10 on a support sp (S160).

According to one embodiment, the coating may be performed in a film manufacturing process. In detail, for example, the coating may be spin coating. In more detail, for example, the coating may be performed in a rotation atmosphere of greater than 250 rpm and less than 1000 rpm for greater than 20 seconds and less than 1 minute. However, the embodiments are not limited thereto.

According to one embodiment, the curing may be performed at a predetermined temperature for a predetermined time. In more detail, for example, the curing may be performed at greater than 50 °C and less than 100 °C for greater than 30 minutes and less than 2 hours. However, the embodiments are not limited thereto.

According to one embodiment, the coating and the curing may be set as one cycle, and the cycle may be repeatedly performed a plurality of times. In more detail, for example, the cycle may be repeated two times. However, the embodiments are not limited thereto.

Accordingly, a dielectric elastomer 100 according to an experimental example of the present disclosure may be manufactured. Referring to FIGS. 5 and 6, the dielectric elastomer 100 may include nanoparticles 4 and a polymer 110 surrounding the nanoparticles 4. According to the dielectric elastomer 100, adjacent nanoparticles 4 may form a cluster 120.

According to one embodiment, as shown in FIG. 6, the cluster 120 may be deformed from a spherical shape into an ellipsoidal shape when the dielectric elastomer 100 is stretched.

Accordingly, a capacitance of a stretchable capacitor 1000 including the dielectric elastomer 100 may be maintained.

According to one embodiment, a thickness of the dielectric elastomer 100 may be decreased when the dielectric elastomer 100 is pressurized.

Accordingly, the capacitance of the stretchable capacitor 1000 including the dielectric elastomer 100 may be increased.

Continuously, a stretchable capacitor including the dielectric elastomer 100 and a manufacturing method thereof will be described.

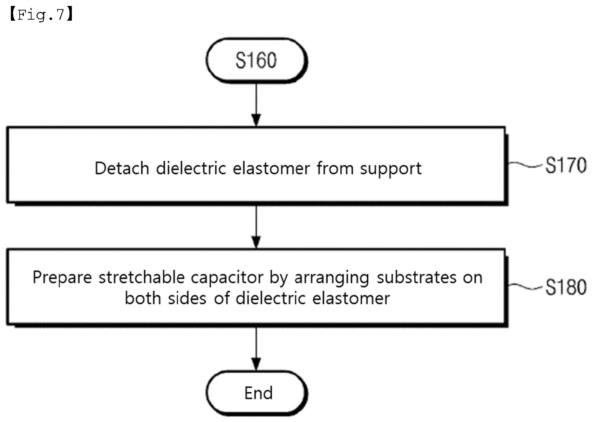

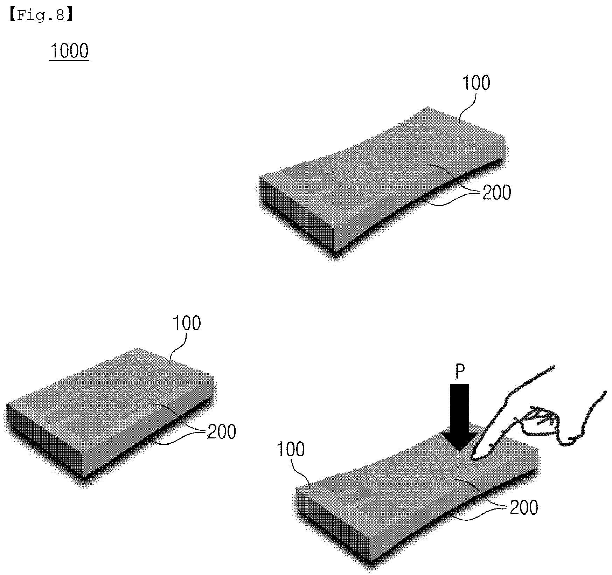

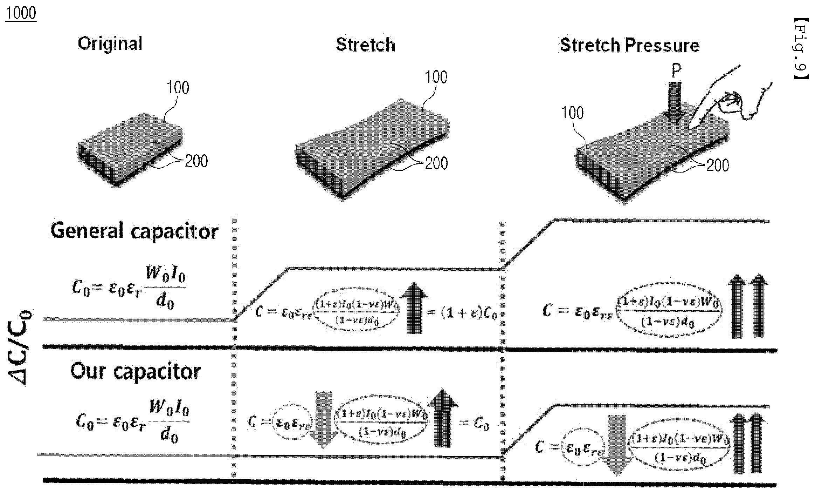

FIG. 7 is a view for describing a method for manufacturing a stretchable capacitor according to an embodiment of the present disclosure, FIG. 8 is a view for describing a stretchable capacitor according to an embodiment of the present disclosure, and FIG. 9 is a view for describing stretching and pressurization of the stretchable capacitor according to the embodiment of the present disclosure.

Referring to FIG. 7, a method for manufacturing a stretchable capacitor 1000 may include the steps S110 to S160 described above. Regarding the steps S110 to S160, reference will be made to the descriptions **in** the previous embodiments.

Continuously referring to FIG. 7, the dielectric elastomer 100 may be detached from the support sp (S170).

As previously described, since the surface treatment is performed on the support sp with the release agent, the dielectric elastomer 100 may be easily detached from the support sp.

Continuously referring to FIGS. 7 and 8, a stretchable capacitor 1000 may be prepared by arranging substrates 200 on both sides of the dielectric elastomer 100 (S180).

According to one embodiment, the substrate 200 may include silver flakes. When the substrate 200 includes the silver flakes, a silver substrate source may first be prepared before the substrate 200 is prepared. In detail, for example, the silver substrate source may be prepared by adding 2-methyl-4-pentanone (MIBK) to a precursor in which Ecoflex A and B are mixed, performing stirring, adding the silver flakes, and performing stirring. In more detail, for example, the silver substrate source may be prepared by adding 2.3 g of 2-methyl-4-pentanone (MIBK) to 1.6 g of a precursor in which Ecoflex A and B are mixed in a mass ratio of 1:1, performing stirring for 30 minutes, adding the silver flakes, and performing stirring for 2 hours. However, the embodiments are not limited thereto.

According to one embodiment, the silver substrate source may be applied onto a mask, heated so that any remaining solution may be removed, and cured. In more detail, for example, the silver substrate source may be applied onto a stainless steel plate mask in the form of a thin film by a screen printing scheme, heated at 90 °C for 1 hour so that any remaining solution may be removed, and cured at 120 °C for 1 hour. However, the embodiments are not limited thereto.

Accordingly, the substrate 200 including the silver flakes may be prepared.

According to one embodiment, the substrate 200 may include a copper pattern (patterned copper). When the substrate 200 includes the copper pattern, the copper pattern may be formed by irradiating copper foil with a laser. In more detail, for example, the copper pattern may be formed by irradiating 17 µm copper foil with an ultraviolet laser.

Accordingly, the substrate 200 including the copper pattern may be prepared.

Referring to FIG. 8, the substrates 200 including the silver flakes or the substrates 200 including the copper pattern may be arranged on both sides of the dielectric elastomer 100.

Accordingly, a stretchable capacitor 1000 according to an embodiment of the present disclosure may be manufactured.

Referring to FIGS. 5 and 8, the stretchable capacitor 1000 may include: a dielectric elastomer 100 including nanoparticles 4 and a polymer 110 surrounding the nanoparticles 4; and substrates 200 arranged on both sides of the dielectric elastomer 100. Referring to FIGS. 5 and 6, adjacent nanoparticles 4 may form a cluster 120 in the dielectric elastomer 100, and the cluster 120 may be deformed from a spherical shape into an ellipsoidal shape when the dielectric elastomer 100 is stretched.

Accordingly, a capacitance of the stretchable capacitor 1000 may be maintained.

According to one embodiment, a thickness of the dielectric elastomer 100 may be decreased when the dielectric elastomer 100 is pressurized.

Accordingly, the capacitance of the stretchable capacitor 1000 may be increased.

This may be because, as previously described, the stretchable capacitor 1000 is manufactured such that the ethyl alcohol (EtOH) and the dichloromethane (DCM) are included as the co-solvent 1, and 20 wt% or 22 wt% of the barium titanate (BaTiO₃) is mixed as the nanoparticles 4.

This may be because, accordingly, the stretchable capacitor 1000 has a gauge factor (GF) of 0.

Alternatively, this may be because, as previously described, the stretchable capacitor 1000 is manufactured such that the ethyl alcohol (EtOH) and the hexane (HX) are included as the co-solvent 1, and 20 wt% of the barium titanate (BaTiO₃) is mixed as the nanoparticles 4.

This may be because, accordingly, the stretchable capacitor 1000 has a gauge factor (GF) of 0.

In other words, referring to FIG. 9, since the stretchable capacitor 1000 has a gauge factor (GF) of 0, a capacitance may be maintained upon stretching, and the capacitance may be increased upon pressurization (Stretch Pressure).

Hereinafter, specific experimental examples and characteristic evaluation results according to embodiments of the present disclosure will be described.

### Manufacture of Dielectric Elastomer according to Experimental Example 1-1 (ex1-1, EtOH/DCM)

A co-solvent 1 was prepared by providing ethyl alcohol (EtOH) and dichloromethane (DCM) in a mass ratio of 9:2 in a container, and performing stirring at a room temperature until a uniform liquid is formed.

A base source 3 was prepared by mixing Ecoflex A and B in a mass ratio of 1:1 as a polymer precursor 2, and stirring 3 g of the polymer precursor 2 and 1.5 g of the co-solvent 1 at 300 rpm for 5 minutes.

A dielectric elastomer source 10 was prepared by adding 5, 10, 15, 18, 20, 22, and 25 wt% of barium titanate (BaTiO₃) to the base source 3 as the nanoparticles 4, and performing stirring at 800 rpm for 10 minutes.

A glass substrate was washed through boiling in an acetone solution as a support sp, and ultrasonication was sequentially performed on the boiled support sp by using water, acetone, and isopropyl alcohol in an order of water, acetone, and isopropyl alcohol.

A dielectric elastomer according to Experimental Example 1-1 (ex1-1, EtOH/DCM) was prepared by performing surface treatment on the washed support sp with Ease Release 200 (ER-200), coating the dielectric elastomer source 10 on the support sp at 500 rpm for 30 seconds, removing any remaining solution in a vacuum atmosphere for 20 minutes, and repeatedly performing a cycle of performing curing at 60 °C for 1 hour two times.

### Manufacture of Dielectric Elastomer according to Experimental Example 1-2 (ex1-2, EtOH/HX)

In Experimental Example 1-1 described above, a dielectric elastomer according to Experimental Example 1-2 (ex1-2, EtOH/HX) was prepared by preparing a co-solvent 1 by providing ethyl alcohol (EtOH) and hexane (HX) in a mass ratio of 3:1.

Experimental Example 1-1 and Experimental Example 1-2 described above may be summarized as shown in Table 2 below.

**[Table 2]**

| Classification | Co-solvent (1) |
|---|---|
| Experimental Example 1-1 (ex1-1, EtOH/DCM) | Ethyl alcohol (EtOH) and dichloromethane (DCM) |
| Experimental Example 1-2 (ex1-2, EtOH/HX) | Ethyl alcohol (EtOH) and hexane (HX) |

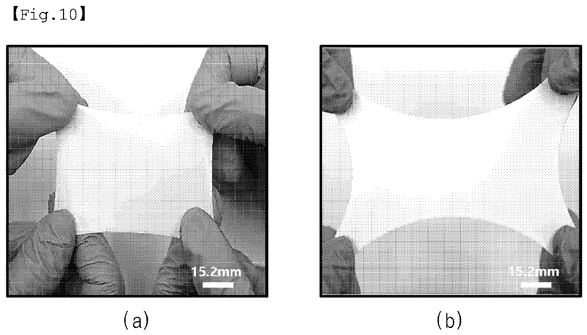

FIG. 10 shows photographs of a dielectric elastomer according to Experimental Example 1-2 (ex1-2, EtOH/HX) of the present disclosure before and after stretching.

Referring to FIG. 10(a), the dielectric elastomer according to Experimental Example 1-2 (ex1-2, EtOH/HX) before stretching, which is manufactured such that the ethyl alcohol (EtOH) and the hexane (HX) are included as the co-solvent 1, and 20 wt% of the barium titanate (BaTiO₃) is mixed as the nanoparticles 4, may be shown. Referring to FIG. 10(b), the dielectric elastomer according to Experimental Example 1-2 (ex1-2, EtOH/HX) after the stretching may be shown.

It may be found through FIG. 10 that the dielectric elastomer 100 manufactured according to the experimental examples of the present disclosure has excellent stretchability.

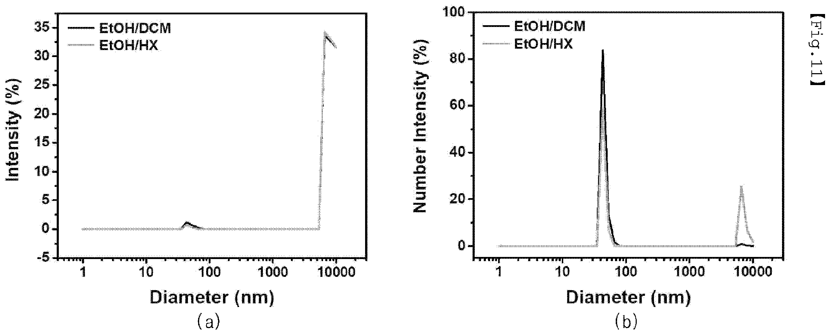

FIG. 11 shows graphs obtained by measuring an aggregation degree after adding 0.1 wt% of barium titanate (BaTiO₃) for each co-solvent according to Experimental Examples of present disclosure.

In this case, the polymer precursor 2 was not mixed.

Referring to FIG. 11, it may be found that a cluster 120 is larger in the co-solvent of Experimental Example 1-2 (ex1-2, EtOH/HX) than in the co-solvent of Experimental Example 1-1 (ex1-1, EtOH/DCM).

Accordingly, it may be demonstrated that when the co-solvent 1 includes the ethyl alcohol (EtOH) and the hexane (HX), which have a greater difference in polarity indexes, a size of the formed cluster 120 may be larger.

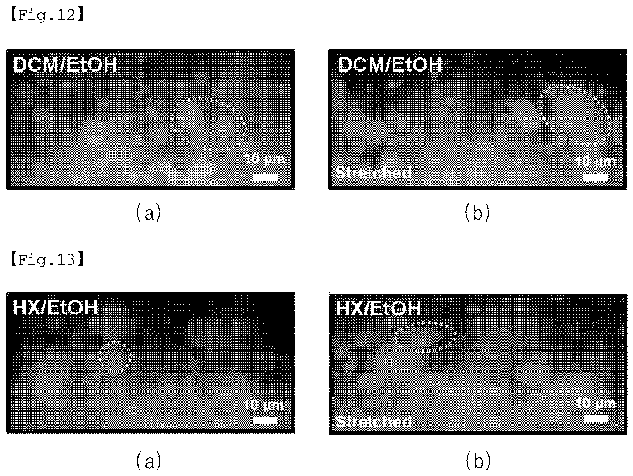

FIG. 12 shows photographs of a cluster of the dielectric elastomer according to Experimental Example 1-1 of the present disclosure before and after stretching, and FIG. 13 shows photographs of a cluster of the dielectric elastomer according to Experimental Example 1-2 of the present disclosure before and after stretching.

Referring to FIG. 12(a), the dielectric elastomer according to Experimental Example 1-1 (ex1-1, EtOH/DCM) before stretching may be shown. Referring to FIG. 12(b), the dielectric elastomer according to Experimental Example 1-1 (ex1-1, EtOH/DCM) after the stretching may be shown. In this case, a mixing amount of the barium titanate (BaTiO₃) was 18 wt%.

Referring to FIG. 13(a), the dielectric elastomer according to Experimental Example 1-2 (ex1-2, EtOH/HX) before stretching may be shown. Referring to FIG. 13(b), the dielectric elastomer according to Experimental Example 1-2 (ex1-2, EtOH/HX) after the stretching may be shown.

It may be found through FIGS. 12 and 13 that when the dielectric elastomer according to Experimental Example 1-1 (ex1-1, EtOH/DCM) and the dielectric elastomer according to Experimental Example 1-2 (ex1-2, EtOH/HX) are stretched, the cluster 120 is deformed from a spherical shape into an ellipsoidal shape.

### Manufacture of Dielectric Elastomer according to Experimental Example 2-1 (ex2-1, DCM5)

In Experimental Example 1-1 described above, a dielectric elastomer according to Experimental Example 2-1 (ex2-1, DCM5) was prepared by adding 5 wt% of the barium titanate (BaTiO₃) as the nanoparticles **4.**

### Manufacture of Dielectric Elastomer according to Experimental Example 2-2 (ex2-2, DCM10)

In Experimental Example 1-1 described above, a dielectric elastomer according to Experimental Example 2-2 (ex2-2, DCM10) was prepared by adding 10 wt% of the barium titanate (BaTiO₃) as the nanoparticles **4.**

### Manufacture of Dielectric Elastomer according to Experimental Example 2-3 (ex2-3, DCM15)

In Experimental Example 1-1 described above, a dielectric elastomer according to Experimental Example 2-3 (ex2-3, DCM15) was prepared by adding 15 wt% of the barium titanate (BaTiO₃) as the nanoparticles **4.**

### Manufacture of Dielectric Elastomer according to Experimental Example 2-4 (ex2-4, DCM18)

In Experimental Example 1-1 described above, a dielectric elastomer according to Experimental Example 2-4 (ex2-4, DCM18) was prepared by adding 18 wt% of the barium titanate (BaTiO₃) as the nanoparticles **4.**

### Manufacture of Dielectric Elastomer according to Experimental Example 2-5 (ex2-5, DCM20)

In Experimental Example 1-1 described above, a dielectric elastomer according to Experimental Example 2-5 (ex2-5, DCM20) was prepared by adding 20 wt% of the barium titanate (BaTiO₃) as the nanoparticles **4.**

### Manufacture of Dielectric Elastomer according to Experimental Example 2-6 (ex2-6, DCM22)

In Experimental Example 1-1 described above, a dielectric elastomer according to Experimental Example 2-6 (ex2-6, DCM22) was prepared by adding 22 wt% of the barium titanate (BaTiO₃) as the nanoparticles **4.**

### Manufacture of Dielectric Elastomer according to Experimental Example 2-7 (ex2-7, DCM25)

In Experimental Example 1-1 described above, a dielectric elastomer according to Experimental Example 2-7 (ex2-7, DCM25) was prepared by adding 25 wt% of the barium titanate (BaTiO₃) as the nanoparticles **4.**

Experimental Example 2-1 to Experimental Example 2-7 may be summarized as shown in Table 3 below.

**[Table 3]**

| Classification | Co-solvent (1) | Content (wt%) of nanoparticles (4) |
|---|---|---|
| Experimental Example 2-1 (ex2-1, DCM5) | Ethyl alcohol (EtOH) and dichloromethane (DCM) | 5 |
| Experimental Example 2-2 (ex2-2, DCM10) | Ethyl alcohol (EtOH) and dichloromethane (DCM) | 10 |
| Experimental Example 2-3 (ex2-3, DCM15) | Ethyl alcohol (EtOH) and dichloromethane (DCM) | 15 |
| Experimental Example 2-4 (ex2-4, DCM18) | Ethyl alcohol (EtOH) and dichloromethane (DCM) | 18 |
| Experimental Example 2-5 (ex2-5, DCM20) | Ethyl alcohol (EtOH) and dichloromethane (DCM) | 20 |
| Experimental Example 2-6 (ex2-6, DCM22) | Ethyl alcohol (EtOH) and dichloromethane (DCM) | 22 |
| Experimental Example 2-7 (ex2-7, DCM25) | Ethyl alcohol (EtOH) and dichloromethane (DCM) | 25 |

### Manufacture of Dielectric Elastomer according to Experimental Example 3-1 (ex3-1, HX5)

In Experimental Example 1-2 described above, a dielectric elastomer according to Experimental Example 3-1 (ex3-1, HX5) was prepared by adding 5 wt% of the barium titanate (BaTiO₃) as the nanoparticles 4.

### Manufacture of Dielectric Elastomer according to Experimental Example 3-2 (ex3-2, HX10)

In Experimental Example 1-2 described above, a dielectric elastomer according to Experimental Example 3-2 (ex3-2, HX10) was prepared by adding 10 wt% of the barium titanate (BaTiO₃) as the nanoparticles 4.

### Manufacture of Dielectric Elastomer according to Experimental Example 3-3 (ex3-3, HX15)

In Experimental Example 1-2 described above, a dielectric elastomer according to Experimental Example 3-3 (ex3-3, HX15) was prepared by adding 15 wt% of the barium titanate (BaTiO₃) as the nanoparticles 4.

### Manufacture of Dielectric Elastomer according to Experimental Example 3-4 (ex3-4, HX18)

In Experimental Example 1-2 described above, a dielectric elastomer according to Experimental Example 3-4 (ex3-4, HX18) was prepared by adding 18 wt% of the barium titanate (BaTiO₃) as the nanoparticles 4.

### Manufacture of Dielectric Elastomer according to Experimental Example 3-5 (ex3-5, HX20)

In Experimental Example 1-2 described above, a dielectric elastomer according to Experimental Example 3-5 (ex3-5, HX20) was prepared by adding 20 wt% of the barium titanate (BaTiO₃) as the nanoparticles 4.

### Manufacture of Dielectric Elastomer according to Experimental Example 3-6 (ex3-6, HX22)

In Experimental Example 1-2 described above, a dielectric elastomer according to Experimental Example 3-6 (ex3-6, HX22) was prepared by adding 22 wt% of the barium titanate (BaTiO₃) as the nanoparticles 4.

### Manufacture of Dielectric Elastomer according to Experimental Example 3-7 (ex3-7, HX25)

In Experimental Example 1-2 described above, a dielectric elastomer according to Experimental Example 3-7 (ex3-7, HX25) was prepared by adding 25 wt% of the barium titanate (BaTiO₃) as the nanoparticles 4.

Experimental Example 3-1 to Experimental Example 3-7 described above may be summarized as shown in Table 4 below.

**[Table 4]**

| Classification | Co-solvent (1) | Content (wt%) of nanoparticles (4) |
|---|---|---|
| Experimental Example 3-1 (ex3-1, HX5) | Ethyl alcohol (EtOH) and hexane (HX) | 5 |
| Experimental Example 3-2 (ex3-2, HX10) | Ethyl alcohol (EtOH) and hexane (HX) | 10 |
| Experimental Example 3-3 (ex3-3, HX15) | Ethyl alcohol (EtOH) and hexane (HX) | 15 |
| Experimental Example 3-4 (ex3-4, HX18) | Ethyl alcohol (EtOH) and hexane (HX) | 18 |
| Experimental Example 3-5 (ex3-5, HX20) | Ethyl alcohol (EtOH) and hexane (HX) | 20 |
| Experimental Example 3-6 (ex3-6, HX22) | Ethyl alcohol (EtOH) and hexane (HX) | 22 |
| Experimental Example 3-7 (ex3-7, HX25) | Ethyl alcohol (EtOH) and hexane (HX) | 25 |

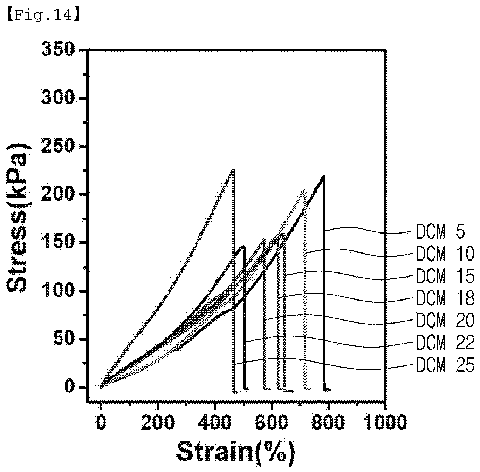

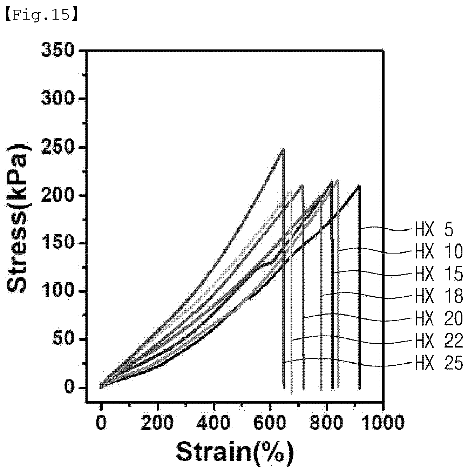

FIG. 14 is a graph obtained by measuring stress-strain of dielectric elastomers according to Experimental Example 2-1 to Experimental Example 2-7 of the present disclosure, and FIG. 15 is a graph obtained by measuring stress-strain of dielectric elastomers according to Experimental Example 3-1 to Experimental Example 3-7 of the present disclosure.

Referring to FIGS. 14 and 15, it may be found that as a content of the nanoparticles 4 is increased, a strain is gradually decreased.

Accordingly, it may be demonstrated that when the content of the nanoparticles 4 is increased in the dielectric elastomer 100, deformation stability is improved.

### Manufacture of Stretchable Capacitor according to Experimental Example 2-1 (ex2-1, DCM5)

A silver substrate source was prepared by adding 2.3 g of 2-methyl-4-pentanone (MIBK) to 1.6 g of a precursor in which Ecoflex A and B are mixed in a mass ratio of 1:1, performing stirring for 30 minutes, adding silver flakes, and performing stirring for 2 hours. A substrate 200 including the silver flakes was prepared by applying the silver substrate source onto a stainless steel plate mask in the form of a thin film by a screen printing scheme, performing heating at 90 °C for 1 hour so that any remaining solution may be removed, and performing curing at 120 °C for 1 hour.

A stretchable capacitor according to Experimental Example 2-1 (ex2-1, DCM5) was prepared by arranging the substrates 200 including the silver flakes on both sides of the dielectric elastomer according to Experimental Example 2-1 described above.

### Manufacture of Stretchable Capacitor according to Experimental Example 2-2 (ex2-2, DCM10)

In the method for manufacturing the capacitor according to Experimental Example 2-1 described above, a stretchable capacitor according to Experimental Example 2-2 (ex2-2, DCM10) was prepared by arranging the substrates 200 including the silver flakes on both sides of the dielectric elastomer according to Experimental Example 2-2 described above.

### Manufacture of Stretchable Capacitor according to Experimental Example 2-3 (ex2-3, DCM15)

In the method for manufacturing the capacitor according to Experimental Example 2-1 described above, a stretchable capacitor according to Experimental Example 2-3 (ex2-3, DCM15) was prepared by arranging the substrates 200 including the silver flakes on both sides of the dielectric elastomer according to Experimental Example 2-3 described above.

### Manufacture of Stretchable Capacitor according to Experimental Example 2-4 (ex2-4, DCM18)

In the method for manufacturing the capacitor according to Experimental Example 2-1 described above, a stretchable capacitor according to Experimental Example 2-4 (ex2-4, DCM18) was prepared by arranging the substrates 200 including the silver flakes on both sides of the dielectric elastomer according to Experimental Example 2-4 described above.

### Manufacture of Stretchable Capacitor according to Experimental Example 2-5 (ex2-5, DCM20)

In the method for manufacturing the capacitor according to Experimental Example 2-1 described above, a stretchable capacitor according to Experimental Example 2-5 (ex2-5, DCM20) was prepared by arranging the substrates 200 including the silver flakes on both sides of the dielectric elastomer according to Experimental Example 2-5 described above.

### Manufacture of Stretchable Capacitor according to Experimental Example 2-6 (ex2-6, DCM22)

In the method for manufacturing the capacitor according to Experimental Example 2-1 described above, a stretchable capacitor according to Experimental Example 2-6 (ex2-6, DCM22) was prepared by arranging the substrates 200 including the silver flakes on both sides of the dielectric elastomer according to Experimental Example 2-6 described above.

### Manufacture of Stretchable Capacitor according to Experimental Example 2-7 (ex2-7, DCM25)

In the method for manufacturing the capacitor according to Experimental Example 2-1 described above, a stretchable capacitor according to Experimental Example 2-7 (ex2-7, DCM25) was prepared by arranging the substrates 200 including the silver flakes on both sides of the dielectric elastomer according to Experimental Example 2-7 described above.

### Manufacture of Stretchable Capacitor according to Experimental Example 3-1 (ex3-1, HX5)

In the method for manufacturing the capacitor according to Experimental Example 2-1 described above, a stretchable capacitor according to Experimental Example 3-1 (ex3-1, HX5) was prepared by arranging the substrates 200 including the silver flakes on both sides of the dielectric elastomer according to Experimental Example 3-1 described above.

### Manufacture of Stretchable Capacitor according to Experimental Example 3-2 (ex3-2, HX10)

In the method for manufacturing the capacitor according to Experimental Example 2-1 described above, a stretchable capacitor according to Experimental Example 3-2 (ex3-2, HX10) was prepared by arranging the substrates 200 including the silver flakes on both sides of the dielectric elastomer according to Experimental Example 3-2 described above.

### Manufacture of Stretchable Capacitor according to Experimental Example 3-3 (ex3-3, HX15)

In the method for manufacturing the capacitor according to Experimental Example 2-1 described above, a stretchable capacitor according to Experimental Example 3-3 (ex3-3, HX15) was prepared by arranging the substrates 200 including the silver flakes on both sides of the dielectric elastomer according to Experimental Example 3-3 described above.

### Manufacture of Stretchable Capacitor according to Experimental Example 3-4 (ex3-4, HX18)

In the method for manufacturing the capacitor according to Experimental Example 2-1 described above, a stretchable capacitor according to Experimental Example 3-4 (ex3-4, HX18) was prepared by arranging the substrates 200 including the silver flakes on both sides of the dielectric elastomer according to Experimental Example 3-4 described above.

### Manufacture of Stretchable Capacitor according to Experimental Example 3-5 (ex3-5, HX20)

In the method for manufacturing the capacitor according to Experimental Example 2-1 described above, a stretchable capacitor according to Experimental Example 3-5 (ex3-5, HX20) was prepared by arranging the substrates 200 including the silver flakes on both sides of the dielectric elastomer according to Experimental Example 3-5 described above.

### Manufacture of Stretchable Capacitor according to Experimental Example 3-6 (ex3-6, HX22)

In the method for manufacturing the capacitor according to Experimental Example 2-1 described above, a stretchable capacitor according to Experimental Example 3-6 (ex3-6, HX22) was prepared by arranging the substrates 200 including the silver flakes on both sides of the dielectric elastomer according to Experimental Example 3-6 described above.

### Manufacture of Stretchable Capacitor according to Experimental Example 3-7 (ex3-7, HX25)

In the method for manufacturing the capacitor according to Experimental Example 2-1 described above, a stretchable capacitor according to Experimental Example 3-7 (ex3-7, HX25) was prepared by arranging the substrates 200 including the silver flakes on both sides of the dielectric elastomer according to Experimental Example 3-7 described above.

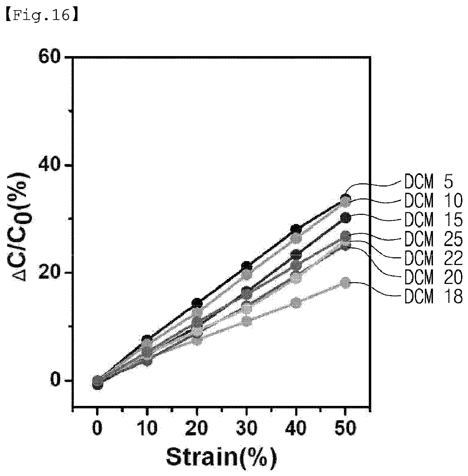

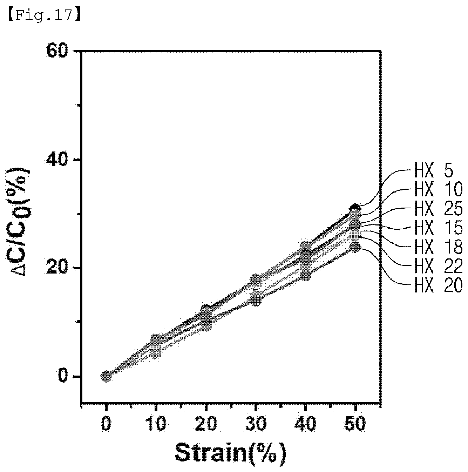

FIG. 16 is a graph obtained by measuring a capacitance variation of stretchable capacitors according to Experimental Example 2-1 to Experimental Example 2-7 of the present disclosure, and FIG. 17 is a graph obtained by measuring a capacitance variation of stretchable capacitors according to Experimental Example 3-1 to Experimental Example 3-7 of the present disclosure.

Referring to FIG. 16, it may be found that when the co-solvent 1 includes the ethyl alcohol (EtOH) and the dichloromethane (DCM), the capacitor according to Experimental Example 2-4 (ex2-4, DCM18) in which a content of the nanoparticles 4 is 18 wt% has the smallest capacitance variation.

Accordingly, a critical significance of Experimental Example 2-4 (ex2-4, DCM18) may be understood.

In addition, referring to FIG. 16, it may be found that when the co-solvent 1 includes the ethyl alcohol (EtOH) and the hexane (HX), the capacitor according to Experimental Example 3-5 (ex3-5, HX20) in which a content of the nanoparticles 4 is 20 wt% has the smallest capacitance variation.

Accordingly, a critical significance of Experimental Example 3-5 (ex3-5, HX20) may be understood.

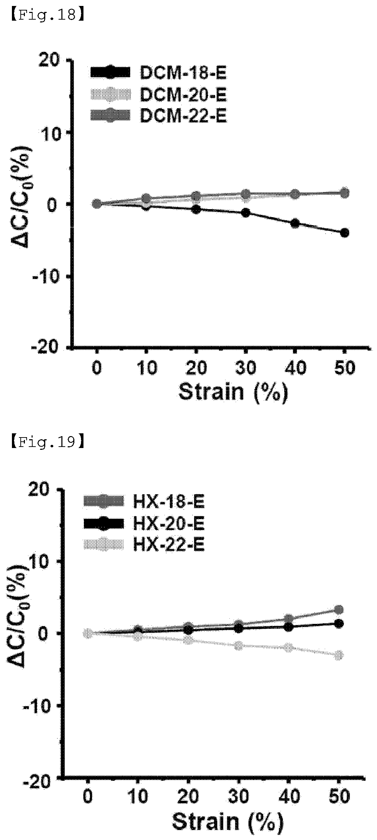

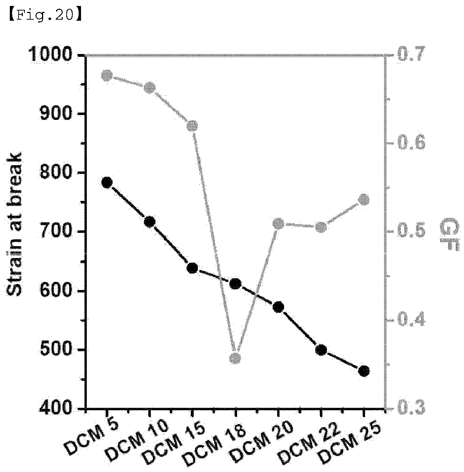

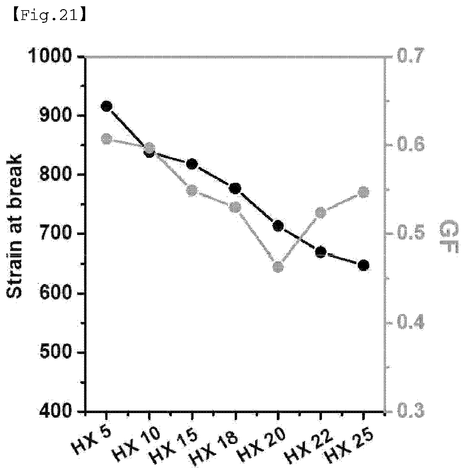

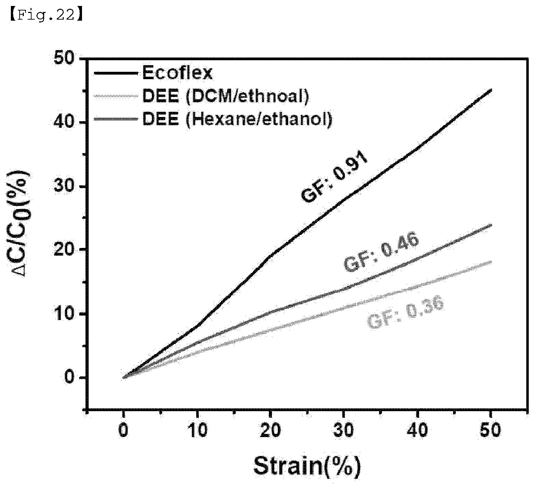

FIG. 18 is a graph obtained by measuring a capacitance variation of the stretchable capacitors according to Experimental Example 2-4 to Experimental Example 2-6 of the present disclosure, FIG. 19 is a graph obtained by measuring a capacitance variation of the stretchable capacitors according to Experimental Example 3-4 to Experimental Example 3-6 of the present disclosure, FIG. 20 is a graph obtained by measuring a gauge factor (GF) of the stretchable capacitors according to Experimental Example 2-1 to Experimental Example 2-7 of the present disclosure, FIG. 21 is a graph obtained by measuring a gauge factor (GF) of the stretchable capacitors according to Experimental Example 3-1 to Experimental Example 3-7 of the present disclosure, and FIG. 22 is a graph obtained by summarizing the gauge factor (GF) of the stretchable capacitors according to Experimental Example 2-1 to Experimental Example 2-7 and Experimental Example 3-1 to Experimental Example 3-7 of the present disclosure.

Referring to FIG. 18, it may be found that when the co-solvent 1 includes the ethyl alcohol (EtOH) and the dichloromethane (DCM), each of the capacitor according to Experimental Example 2-5 (ex2-5, DCM20) in which a content of the nanoparticles 4 is 20 wt% and the capacitor according to Experimental Example 2-6 (ex2-6, DCM22) in which a content of the nanoparticles 4 is 22 wt% has a gauge factor (GF) of 0.

In addition, referring to FIG. 19, it may be found that when the co-solvent 1 includes the ethyl alcohol (EtOH) and the hexane (HX), the capacitor according to Experimental Example 3-5 (ex3-5, HX20) in which a content of the nanoparticles 4 is 20 wt% has a gauge factor (GF) of 0.

Accordingly, it may be demonstrated that in cases of Experimental Example 2-5 (ex2-5, DCM20), Experimental Example 2-6 (ex2-6, DCM22), and Experimental Example 3-5 (ex3-5, HX20), the manufactured stretchable capacitor 1000 has a gauge factor (GF) of 0.

Referring to FIG. 20, it may be found that when the co-solvent 1 includes the ethyl alcohol (EtOH) and the dichloromethane (DCM), the capacitor according to Experimental Example 2-4 (ex2-4, DCM18) in which a content of the nanoparticles 4 is 18 wt% has the smallest gauge factor (GF).

Accordingly, a critical significance of Experimental Example 2-4 (ex2-4, DCM18) may be understood.

In addition, referring to FIG. 21, it may be found that when the co-solvent 1 includes the ethyl alcohol (EtOH) and the hexane (HX), the capacitor according to Experimental Example 3-5 (ex3-5, HX20) in which a content of the nanoparticles 4 is 20 wt% has the smallest capacitance variation.

Accordingly, a critical significance of Experimental Example 3-5 (ex3-5, HX20) may be understood.

Referring to FIG. 22, it may be found that: when the co-solvent 1 is not included (Ecoflex), the manufactured capacitor has the largest gauge factor (GF); when the co-solvent 1 includes ethanol and hexane (Hexane/ethanol), the manufactured capacitor has a relatively small gauge factor (GF); and when the co-solvent 1 includes ethanol and dichloromethane (DCM) (DCM/ethanol), the manufactured capacitor has the smallest gauge factor (GF).

### Manufacture of Stretchable Capacitor according to Experimental Example 2-4 (ex2-4, DCM-18-E)

A substrate 200 including a copper pattern was prepared by irradiating 17 µm copper foil with an ultraviolet laser.

A stretchable capacitor according to Experimental Example 2-4 (ex2-4, DCM-18-E) was prepared by arranging the substrates 200 including the copper pattern with the dielectric elastomer according to Experimental Example 2-4 described above interposed therebetween.

### Manufacture of Stretchable Capacitor according to Experimental Example 2-5 (ex2-5, DCM-20-E)

In the method for manufacturing the capacitor according to Experimental Example 2-4 described above, a stretchable capacitor according to Experimental Example 2-5 (ex2-5, DCM-20-E) was prepared by arranging the substrates 200 including the copper pattern with the dielectric elastomer according to Experimental Example 2-5 described above interposed therebetween.

### Manufacture of Stretchable Capacitor according to Experimental Example 2-6 (ex2-6, DCM-22-E)

In the method for manufacturing the capacitor according to Experimental Example 2-4 described above, a stretchable capacitor according to Experimental Example 2-6 (ex2-6, DCM-22-E) was prepared by arranging the substrates 200 including the copper pattern with the dielectric elastomer according to Experimental Example 2-6 described above interposed therebetween.

### Manufacture of Stretchable Capacitor according to Experimental Example 3-4 (ex3-4, HX-18-E)

In the method for manufacturing the capacitor according to Experimental Example 2-4 described above, a stretchable capacitor according to Experimental Example 3-4 (ex3-4, HX-18-E) was prepared by arranging the substrates 200 including the copper pattern with the dielectric elastomer according to Experimental Example 3-4 described above interposed therebetween.

### Manufacture of Stretchable Capacitor according to Experimental Example 3-5 (ex3-5, HX-20-E)

In the method for manufacturing the capacitor according to Experimental Example 2-4 described above, a stretchable capacitor according to Experimental Example 3-5 (ex3-5, HX-20-E) was prepared by arranging the substrates 200 including the copper pattern with the dielectric elastomer according to Experimental Example 3-5 described above interposed therebetween.

### Manufacture of Stretchable Capacitor according to Experimental Example 3-6 (ex3-6, HX-22-E)

In the method for manufacturing the capacitor according to Experimental Example 2-4 described above, a stretchable capacitor according to Experimental Example 3-6 (ex3-6, HX-22-E) was prepared by arranging the substrates 200 including the copper pattern with the dielectric elastomer according to Experimental Example 3-6 described above interposed therebetween.

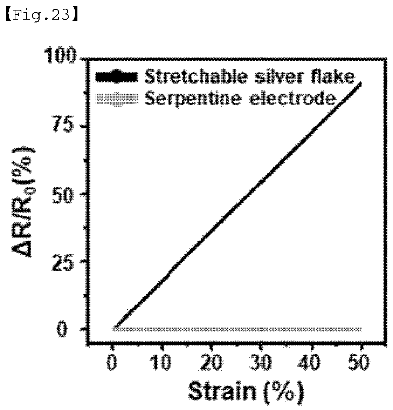

FIG. 23 is a graph obtained by measuring a resistance variation of the stretchable capacitors according to Experimental Example 2-4 to Experimental Example 2-6 and Experimental Example 3-4 to Experimental Example 3-6 of the present disclosure.

Referring to FIG. 23, it may be found that a resistance variation is smaller in the stretchable capacitors including the copper pattern according to Experimental Example 2-4 to Experimental Example 2-6 (ex2-4, DCM-18-E to ex2-6, DCM-22-E) and Experimental Example 3-4 to Experimental Example 3-6 (ex3-4, HX-18-E to ex3-6, HX-22-E) (Serpentine electrode) than in the stretchable capacitors including the silver flakes (Stretchable silver flake).

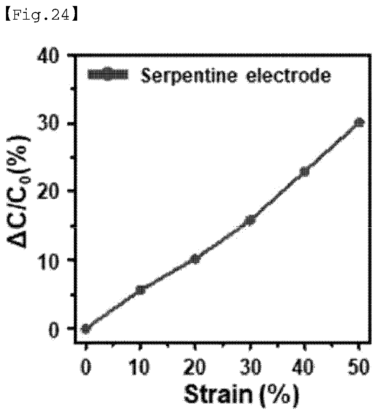

FIG. 24 is a graph obtained by measuring a capacitance variation of a stretchable capacitor according to a general stretchable substrate.

Referring to FIG. 24, it may be found that the stretchable capacitor including the copper pattern (Serpentine electrode) according to a general stretchable substrate has a linear capacitance variation.

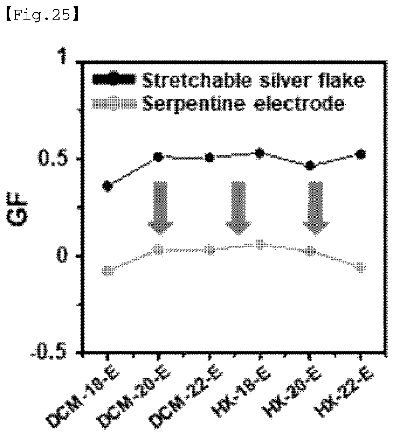

FIG. 25 is a graph obtained by measuring a gauge factor (GF) of the stretchable capacitors according to Experimental Example 2-4 to Experimental Example 2-6 and Experimental Example 3-4 to Experimental Example 3-6 of the present disclosure.

Referring to FIG. 25, it may be found that each of the stretchable capacitors including the copper pattern according to Experimental Example 2-4 to Experimental Example 2-6 (ex2-4, DCM-18-E to ex2-6, DCM-22-E) and Experimental Example 3-4 to Experimental Example 3-6 (ex3-4, HX-18-E to ex3-6, HX-22-E) (Serpentine electrode) has a gauge factor (GF) of greater than - 0.5 and less than 0.

In particular, it may be found that each of the stretchable capacitors including the copper pattern according to Experimental Example 2-5 and Experimental Example 2-6 (ex2-5, ex2-6, DCM-20-E, DCM-22-E) and Experimental Example 3-4 and Experimental Example 3-5 (ex3-4, ex3-5, HX-18-E, HX-20-E) (Serpentine electrode) has a gauge factor (GF) of 0.

Accordingly, it may be demonstrated that in the case of Experimental Example 2-5 and Experimental Example 2-6 (ex2-5, ex2-6, DCM-20-E, DCM-22-E) and Experimental Example 3-4 and Experimental Example 3-5 (ex3-4, ex3-5, HX-18-E, HX-20-E), the manufactured stretchable capacitor 1000 has a gauge factor (GF) of 0.

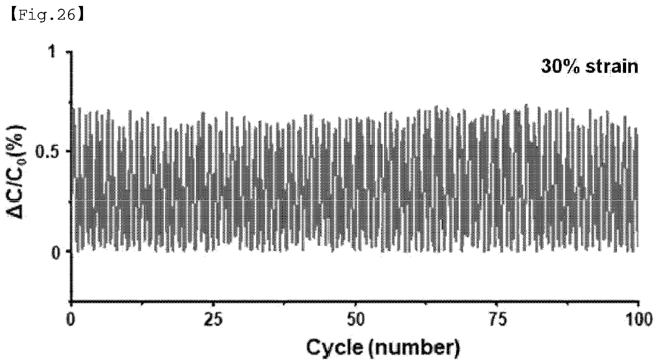

FIG. 26 is a graph obtained by measuring a capacitance variation of the stretchable capacitor according to Experimental Example 3-5 of the present disclosure over 100 cycles.

Referring to FIG. 26, it may be found that the stretchable capacitor including the copper pattern according to Experimental Example 3-5 (ex3-5, HX-20-E) (Serpentine electrode) maintains a stable capacitance over 100 cycles when subjected to 30% tension.

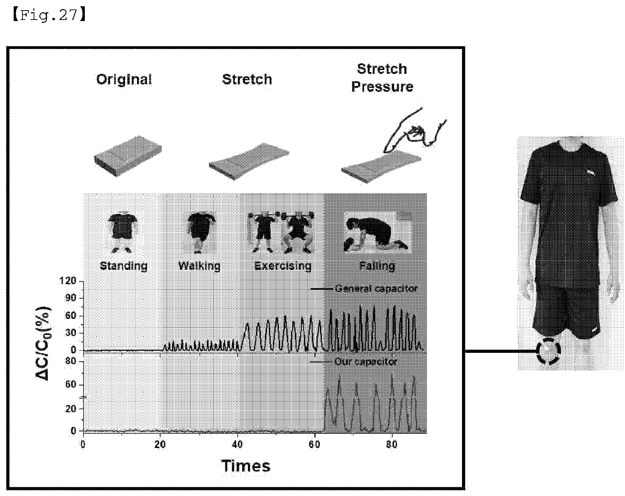

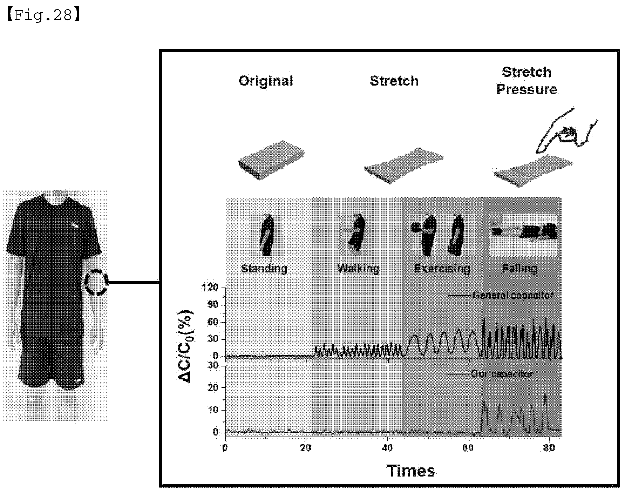

FIG. 27 is a graph obtained by measuring a capacitance variation according to a movement of a body when the stretchable capacitor according to Experimental Example 3-5 of the present disclosure is worn on a knee of the body, and FIG. 28 is a graph obtained by measuring a capacitance variation according to a movement of a body when the stretchable capacitor according to Experimental Example 3-5 of the present disclosure is worn on an arm of the body.

Referring to FIGS. 27 and 28, it may be found that the stretchable capacitor according to Experimental Example 3-5 (ex3-5, HX-20-E) (Our capacitor) has substantially no capacitance variation in cases of a body movement corresponding to non-stretching and non-pressurization of the capacitor 1000, that is, standing (Standing) and a body movement corresponding to stretching of the capacitor 1000, that is, walking (Walking) and exercising (Exercising), and has a capacitance variation in a case of a body movement corresponding to pressurization of the capacitor 1000, that is, falling (Falling).

Accordingly, it may be demonstrated that the stretchable capacitor 1000 according to the embodiment of the present disclosure (Our capacitor) may distinguish between stretching and pressure, a capacitance is maintained upon stretching, and the capacitance is increased upon pressurization.

Meanwhile, referring to FIGS. 27 and 28, it may be found that an existing capacitor (General capacitor) has substantially no capacitance variation in the case of the body movement corresponding to the non-stretching and the non-pressurization of the capacitor, that is, standing (Standing), and has a capacitance variation in the cases of both the body movement corresponding to the stretching of the capacitor, that is, walking (Walking) and exercising (Exercising) and the body movement corresponding to the pressurization of the capacitor 1000, that is, falling (Falling).

Therefore, it may be found that unlike the embodiment of the present disclosure, the existing capacitor (General capacitor) may not distinguish between stretching and pressure.

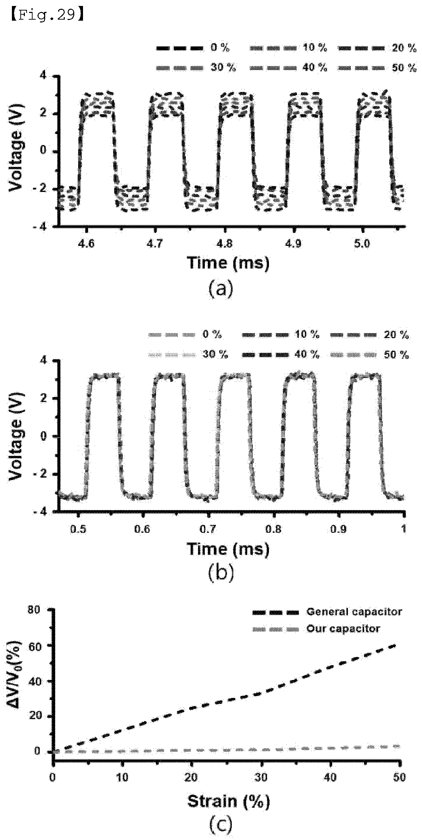

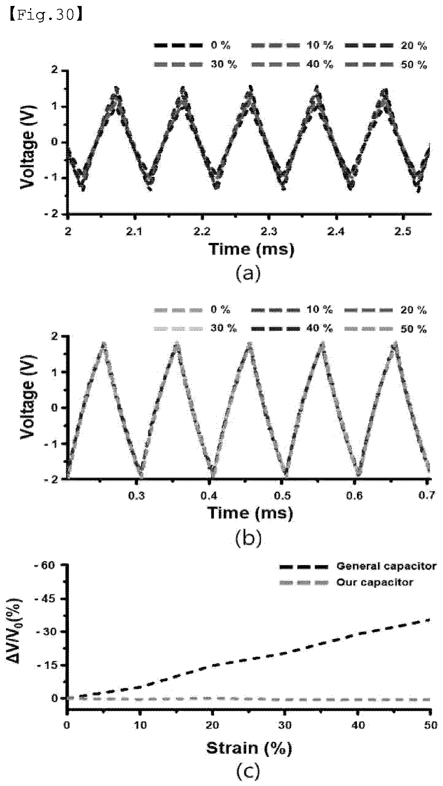

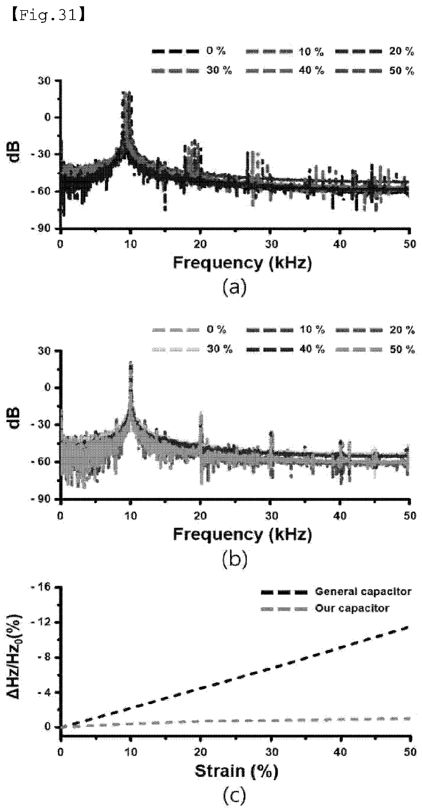

FIG. 29 shows graphs obtained by measuring signals when the stretchable capacitor according to Experimental Example 3-5 of the present disclosure and a conventional capacitor are applied to a differentiator, FIG. 30 shows graphs obtained by measuring signals when the stretchable capacitor according to Experimental Example 3-5 of the present disclosure and the conventional capacitor are applied to an integrator, and FIG. 31 shows graphs obtained by measuring signals when the stretchable capacitor according to Experimental Example 3-5 of the present disclosure and the conventional capacitor are applied to a resistor-capacitor circuit (RC circuit).

FIGS. 29(a), 30(a), and 31(a) are graphs obtained by measuring a signal of the existing capacitor (General capacitor), FIGS. 29(b), 30(b), and 31(b) are graphs obtained by measuring a signal of the stretchable capacitor according to Experimental Example 3-5 (ex3-5, HX-20-E) (Our capacitor), and FIGS. 29(c), 30(c), and 31(c) are comparative graphs obtained by measuring signals of the existing capacitor (General capacitor) and the stretchable capacitor according to Experimental Example 3-5 (ex3-5, HX-20-E) (Our capacitor).

Referring to FIGS. 29 to 31, it may be found that the stretchable capacitor according to Experimental Example 3-5 (ex3-5, HX-20-E) (Our capacitor) maintains a constant capacitance despite mechanical deformation.

Conversely, it may be found that the existing capacitor (General capacitor) has an increased capacitance due to mechanical deformation so that a resonant frequency is decreased, and circuit performance is reduced.

Accordingly, capacitance stability of the stretchable capacitor 1000 according to the embodiment of the present disclosure (Our capacitor) may be demonstrated.

Although the exemplary embodiments of the present disclosure have been described in detail above, the scope of the present disclosure is not limited to a specific embodiment, and shall be interpreted by the appended claims. In addition, it is to be understood by a person having ordinary skill in the art that various variations and modifications can be made without departing from the scope of the present disclosure.

## Claims

1. A method for manufacturing a dielectric elastomer, the method comprising:
preparing a co-solvent;
preparing a base source by mixing the co-solvent with a polymer precursor;
preparing a dielectric elastomer source by mixing the base source with nanoparticles; and
preparing a dielectric elastomer in which a polymer formed from the polymer precursor surrounds the nanoparticles by coating and curing the dielectric elastomer source on a support,
wherein adjacent nanoparticles form a cluster,
the co-solvent includes ethyl alcohol (EtOH) and hexane (HX), and
greater than 18 wt% and less than 22 wt% of barium titanate (BaTiO₃) is provided as the nanoparticles.

2. The method of claim 1, wherein the co-solvent includes a dispersion solution and a non-dispersion solution, and
the co-solvent forms the nanoparticles into the cluster.

3. The method of claim 1, wherein the polymer precursor includes an Ecoflex precursor.

4. A method for manufacturing a dielectric elastomer, the method comprising:
dielectric elastomer, the method comprising:
preparing a co-solvent;
preparing a base source by mixing the co-solvent with a polymer precursor;
preparing a dielectric elastomer source by mixing the base source with nanoparticles; and
preparing a dielectric elastomer in which a polymer formed from the polymer precursor surrounds the nanoparticles by coating and curing the dielectric elastomer source on a support,
wherein adjacent nanoparticles form a cluster,
the co-solvent includes ethyl alcohol (EtOH) and dichloromethane (DCM), and
greater than 15 wt% and less than 20 wt% of barium titanate (BaTiO₃) is provided as the nanoparticles.

5. The method of claim 1, wherein before the coating, the method further comprises washing the support, and
the washing includes:
boiling the support in a solution; and
performing ultrasonication on the boiled support.

6. The method of claim 5, wherein before the coating, the method further comprises performing surface treatment on the support, and
in the performing of the surface treatment, the surface treatment is performed on the washed support with a release agent.

7. A method for manufacturing a dielectric elastomer, the method comprising:
dielectric elastomer, the method comprising:
preparing a co-solvent;
preparing a base source by mixing the co-solvent with a polymer precursor;
preparing a dielectric elastomer source by mixing the base source with nanoparticles; and
preparing a dielectric elastomer in which a polymer formed from the polymer precursor surrounds the nanoparticles by coating and curing the dielectric elastomer source on a support,
wherein adjacent nanoparticles form a cluster,
the coating is performed in a rotation atmosphere of greater than 250 rpm and less than 1000 rpm for greater than 20 seconds and less than 1 minute, and
the curing is performed at greater than 50 °C and less than 100 °C for greater than 30 minutes and less than 2 hours.

8. The method of claim 7, wherein the coating and the curing are set as one cycle, and
the cycle is repeatedly performed a plurality of times.

9. The method of claim 1, wherein in the preparing of the dielectric elastomer source, a surfactant is further mixed.

10. A dielectric elastomer comprising:
nanoparticles; and
a polymer surrounding the nanoparticles,
wherein adjacent nanoparticles form a cluster,
a capacitance is maintained upon stretching,
the capacitance is increased upon pressurization, and
a gauge factor (GF) is 0.

11. The dielectric elastomer of claim 10, wherein upon the stretching, the capacitance is maintained as the cluster is deformed into an ellipsoidal shape, and
upon the pressurization, the capacitance is increased as a thickness is decreased.

12. A method for manufacturing a stretchable capacitor, the method comprising:
preparing a co-solvent;
preparing a base source by mixing the co-solvent with a polymer precursor;
preparing a dielectric elastomer source by mixing the base source with nanoparticles;
preparing a dielectric elastomer including a cluster formed from adjacent nanoparticles by coating and curing the dielectric elastomer source on a support;
detaching the dielectric elastomer from the support; and
preparing a stretchable capacitor by arranging substrates on both sides of the dielectric elastomer,
wherein a capacitance is maintained upon stretching,
the capacitance is increased upon pressurization, and
a gauge factor (GF) is 0.

13. The method of claim 12, wherein the substrate includes silver flakes or a copper pattern (patterned copper).

14. A stretchable capacitor comprising:
a dielectric elastomer including nanoparticles and a polymer surrounding the nanoparticles; and
substrates arranged on both sides of the dielectric elastomer,
wherein adjacent nanoparticles form a cluster in the dielectric elastomer,
a capacitance is maintained upon stretching,
the capacitance is increased upon pressurization, and
a gauge factor (GF) is 0.
